# EUROPÄISCHE PATENTSCHRIFT

(11) **EP 2 064 031 B1**
(45) Veröffentlichungstag und Bekanntmachung des Hinweises auf die Patenterteilung: **16.01.2019**
(21) Anmeldenummer: 07787420.4
(22) Anmeldetag: 12.07.2007
(51) Int. Cl.: B23B 47/30, B25B 21/00, B25F 3/00, B25B 23/147

(54) **ELEKTROHANDWERKZEUGMASCHINE**
ELECTRIC POWER HAND TOOL
MACHINE ÉLECTRIQUE MANUELLE

(30) Priorität: 04.09.2006 DE 102006041390
(43) Veröffentlichungstag der Anmeldung: 03.06.2009
(73) Patentinhaber: Robert Bosch GmbH, 70442 Stuttgart (DE)
(72) Erfinder: TIEDE, Steffen, 71083 Herrenberg (DE); DEHDE, Joerg, 71144 Steinenbronn (DE); MOSER, Andreas, 70327 Stuttgart (DE)
(86) Internationale Anmeldenummer: PCT/EP2007/057149
(87) Internationale Veröffentlichungsnummer: WO 2008/028713

(56) Entgegenhaltungen:
- DE-A1- 10 217 701
- DE-U1- 20 122 326
- GB-A- 2 372 471
- GB-A- 2 375 981
- US-A1- 2004 141 818

## Beschreibung

### Stand der Technik

Eine aus DE 201 22326 U1 bekannte, elektrische Handbohrmaschine mit einem Revolverkopf zur gleichzeitigen Aufnahme eines Bohrwerkzeugs, auch Bohrer-Bit genannt, und eines Schraubwerkzeugs, auch Schrauber-Bit genannt, wird beispielsweise zum arbeitszeitsparenden Vorbohren und Einschrauben von Holzschrauben verwendet, indem durch Drehen des Revolverkopfes abwechselnd das Bohrer-Bit und das Schrauber-Bit zum Einsatz gebracht werden. Der Revolverkopf ist mittels eines Lagers verdrehbar an einer schrägen Fläche des Maschinengehäuses befestigt. Die schräge Fläche ist an der Vorderseite des Maschinengehäuses unter einem Winkel von ca. 45° bis 65° zur Achse einer im Gehäuse gelagerten Antriebswelle angeordnet. Der Revolverkopf ist mit zwei antreibbaren Spindeln versehen, von denen die eine Spindel das Spannfutter für das Bohrer-Bit und die andere Spindel das Spannfutter für das Schrauber-Bit trägt. Eine Kupplung verbindet je nach Drehstellung des Revolverkopfes eine der beiden Spindeln mit der Antriebswelle, die ihrerseits über ein Getriebe von einem im Gehäuse aufgenommenen Elektromotor angetrieben ist.

Aus der GB 2 375 981 ist eine Elektrohandwerkzeugmaschine bekannt, die, mit einem Gehäuse, mit einem im Gehäuse aufgenommenen Drehantrieb und mit einer Mehrzahl von Aufnahmevorrichtungen für jeweils ein Drehwerkzeug, die wechselweise mit dem Drehantrieb koppelbar sind.

Aus der GB 2 372 471 A ist eine Elektrohandwerkzeugmaschine mit einem Grundkörper und einer Mehrzahl von Aufsätzen bekannt. Der Grundkörper umfasst einen Kontrollmechanismus, der von einem Teil der Aufsätze betätigbar ist.

Aus der DE 102 17 701 A1 ist ein Schrauber mit einem elektromotorischen Antrieb bekannt, der zwei Spannfutter zur Aufnahme von Werkzeugen besitzt, die sich einander gegenüberliegend etwa auf einer Achse befinden.

Aus der US 2004/0141818 A1 ist ein Bohrer mit einem Antriebskopf bekannt, der ein erstes Spannfutter aufweist und ein zweites Spannfutter aufweist, das an einem gegenüberliegenden Ende des Antriebskopfes aufweist.

Aus der DE 201 22 326 U1 ist eine Handbohrmaschine mit einem Gehäuse, einer Antriebswelle, die in dem Gehäuse drehbar gelagert ist, und einem verdrehbar an dem Gehäuse befestigten und mit wenigstens zwei angetriebenen Wellen versehenen Revolverkopf bekannt, wobei die angetriebenen Wellen derart angeordnet sind, dass sie einzeln in eine Betriebsstellung gebracht werden können.

### Offenbarung der Erfindung

Dokument DE 201 22 326 U offenbart eine Elektrohandwerkzeugmaschine für Drehwerkzeuge, mit einem Gehäuse, mit einem im Gehäuse aufgenommenen Drehantrieb und mit mindestens zwei Aufnahmevorrichtungen für jeweils ein Drehwerkzeug, die wechselweise mit dem Drehantrieb koppelbar sind, wobei die mindestens zwei Aufnahmevorrichtungen an einem Revolverkopf angeordnet sind und die wechselweise Kopplung der Aufnahmevorrichtungen mit dem Drehantrieb durch Schwenken oder Umstecken des Revolverkopfs in eine von zwei am Gehäuse vorgebbaren Arbeitsstellungen erfolgt.

Die Erfindung schlägt eine Elektrowerkzeugmaschine mit den Merkmalen des Anspruchs 1 vor.

Dadurch kann mit Aufkoppeln der mit dem Drehwerkzeug versehenen Aufnahmevorrichtung auf den Drehantrieb ein vorgewähltes Drehmoment für das Arbeiten mit dem Drehwerkzeug automatisch eingestellt werden. Dabei wird ein einmalig vorgegebenes Drehmoment für das Drehwerkzeug auch nach zeitweiligem Arbeiten mit einem in der anderen Aufnahmevorrichtung aufgenommenen Drehwerkzeug beim Wiederankoppeln der Aufnahmevorrichtung an den Drehantrieb wieder selbsttätig hergestellt. Somit entfällt das gesonderte Umstellen des Drehmomentes beim Wechsel des Arbeitsvorgangs, was eine wesentliche Zeitersparnis zur Folge hat und den Arbeitsablauf erheblich erleichtert. Beispielhaft kann ein Bohrvorgang mit einem Bohrwerkzeug vorgenommen und anschließend in das Bohrloch eine Schraube mit einem vorgegebenen Anzugsdrehmoment eingeschraubt werden, wobei die beiden Arbeitsvorgänge mehrfach wiederholt werden können, ohne dass das Drehmoment beim Schrauben stets neu eingestellt oder an das erneute Einstellen des Drehmoments gedacht werden muss.

Durch die in den weiteren Ansprüchen aufgeführten Maßnahmen sind vorteilhafte Weiterbildungen und Verbesserungen der im Anspruch 1 angegebenen Elektrohandwerkzeugmaschine möglich.

Gemäß einer vorteilhaften Ausführungsform der Erfindung ist die Aufnahmevorrichtung mit zugeordnetem Drehmomenteinsteller ein an das Gehäuse ansetzbares und vom Gehäuse abnehmbares Wechselmodul, das so ausgebildet ist, dass mit Ansetzen des Wechselmoduls an das Gehäuse die Kopplung mit dem Drehantrieb vollzogen ist. Auch hier bleibt bei mehrmaligem, intervallmäßigem Gebrauch des Drehwerkzeugs die Drehmomentvorwahl erhalten und braucht nicht beim Wechseln des Drehwerkzeugs erneut bedacht zu werden.

Der Drehmomenteinsteller weist vorzugsweise einen im Stromkreis des Drehantriebs einschaltbaren Widerstand und einen dessen Widerstandswert verändernden Drehmoment-Vorwahlknopf auf, der am Gehäuse manuell zugänglich angeordnet ist. Die Schaltmittel weisen am Gehäuse angeordnete elektrische Kontakte und mindestens eine am Revolverkopf angeordnete elektrische Kontaktbrücke auf, die durch Schwenken oder Umstecken des Revolverkopfes ausgewählte Kontakte kontaktiert. Bei dieser Anordnung und Ausgestaltung des Drehmomenteinstellers ist der technische Aufwand minimal und beschränkt sich auf die elektrischen Schaltmittel und einen im Stromkreis des Drehantriebs angeordneten Widerstand. In vorteilhafter Weise ist der Widerstand als elektronisches oder mechanisches Potentiometer ausgebildet, so dass die Größe des einstellbaren Drehmoments in Stufen oder stufenlos von Hand vorgewählt werden kann.

Bei Anordnung des Drehmomenteinstellers im Revolverkopf weist gemäß einer vorteilhaften Ausführungsform der Erfindung der Drehmomenteinsteller eine Überrastkupplung mit Kupplungselementen und Kupplungsfeder sowie einen Drehmoment-Vorwahlring auf, über den die auf die Kupplungselemente wirkende Vorspannung der Kupplungsfeder einstellbar ist.

### Kurze Beschreibung der Zeichnungen

Die Erfindung ist anhand eines in der Zeichnung dargestellten Ausführungsbeispiels in der nachfolgenden Beschreibung näher erläutert. Es zeigen:
Fig. 1 eine Seitenansicht eines Akku-Bohrschraubers mit Revolverkopf und im Gehäuse angeordnetem Drehmomenteinsteller, schematisiert dargestellt,
Fig. 2 jeweils ein Schaltbild des Akku-Bohrschraubers in Fig. 1 in zwei und 3 unterschiedlichen Drehstellungen des Revolverkopfes,
Fig. 4 eine Seitenansicht eines Akku-Bohrschraubers gemäß einem weiteren Ausführungsbeispiel mit Revolverkopf und im Revolverkopf angeordnetem Drehmomenteinsteller, schematisiert dargestellt,
Fig. 5 eine Seitenansicht eines Akku-Bohrschraubers mit Wechselmodul und im Wechselmodul angeordnetem Drehmomenteinsteller, schematisiert dargestellt,
Fig. 6 eine vergrößerte Schnittdarstellung eines Drehmomenteinstellers mit Werkzeug-Aufnahmevorrichtung in Fig. 4 oder 5.

### Ausführungsformen der Erfindung

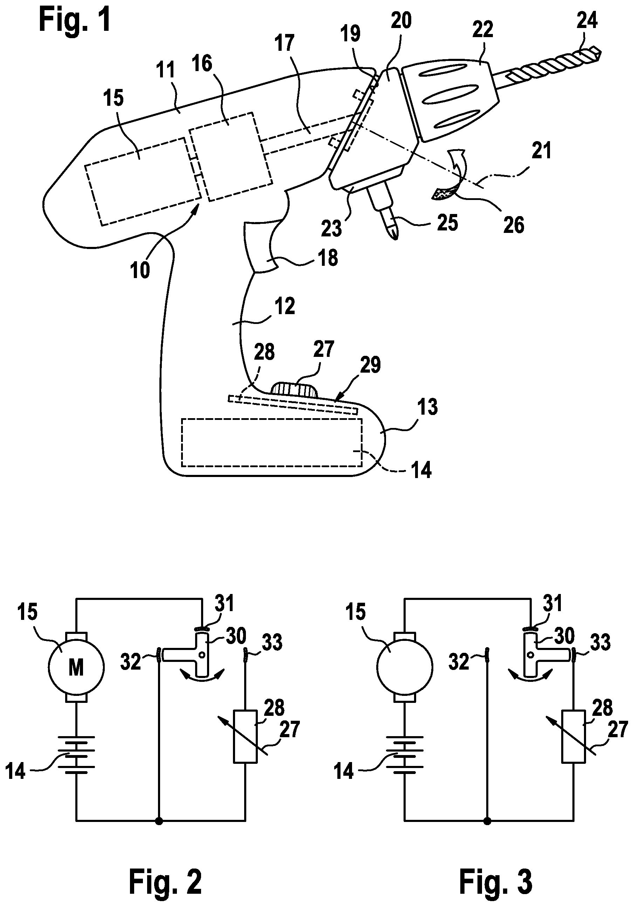

Der in Fig. 1 als Ausführungsbeispiel für eine allgemeine Elektrohandwerkzeugmaschine in Seitenansicht schematisch skizzierte Akku-Bohrschrauber weist ein Gehäuse 11 mit einem angeformten Handgriff 12 und einem am gehäusefernen Ende des Handgriffs 12 angesetzten Fuß 13 auf, in dem ein wechselbarer Akkumulator 14 - nachfolgend kurz Akku 14 genannt - aufgenommen ist. Ein im Gehäuse 11 angeordneter Drehantrieb 10 umfasst einen Elektromotor 15 und ein Getriebe 16 mit einer die Antriebswelle 17 des Drehantriebs 10 bildenden Getriebeabtriebswelle. Der Elektromotor 15 wird aus dem Akku 14 gespeist und ist mittels eines am Handgriff 12 angeordneten Ein-/Aus-Schalters 18 ein- und ausschaltbar.

An der Vorderseite des Gehäuses 11 ist eine schräge Fläche 19 ausgebildet, die unter einem Winkel vom 45° zur Achse der Antriebswelle 17 verläuft. An der schrägen Fläche 19 ist ein Revolverkopf 20 mittels eines hier nicht dargestellten Lagers um eine Hochachse 21 dreh- oder schwenkbar angeordnet, die rechtwinklig auf der schrägen Fläche 19 steht. Der Revolverkopf 20 kann gleichzeitig mit zwei Drehwerkzeugen versehen werden, wozu der Revolverkopf 20 zwei Aufnahmevorrichtungen 22, 23 für ein Drehwerkzeug trägt, hier ein Spannfutter 22 und einen Universalhalter 23. Jede Aufnahmevorrichtung 22, 23 ist fest mit einer hier nicht dargestellten Spindel verbunden. Je nach Dreh- oder Schwenkstellung des Revolverkopfs 20 ist eine der Spindeln - und damit die entsprechende Aufnahmevorrichtung 22, 23 - an die Antriebswelle 17 ankoppelbar. Im gezeigten Ausführungsbeispiel ist im Spannfutter 22 ein Spiralbohrer 24 eingespannt und in den Universalhalter 23 ein Schraubwerkzeug oder Schrauber 25 eingesteckt. Selbstverständlich können auch anstelle von Spiralbohrer 24 und Schrauber 25 andere Drehwerkzeuge, wie z.B. Fräser oder Gewindebohrer, in den beiden Aufnahmevorrichtungen 22, 23 aufgenommen werden.

In der in Fig. 1 dargestellten Stellung des Revolverkopfs 20 befindet sich die den Spiralbohrer 24 aufnehmende Aufnahmevorrichtung 22, also das Spannfutter 22, in ihrer Arbeitsstellung, in welcher die Aufnahmevorrichtung 22 mit der Antriebswelle 17 gekoppelt ist. Wird der Revolverkopf 20 in Richtung Pfeil 26 in Fig. 1 um 180° um die Hochachse 21 geschwenkt, so wird die Aufnahmevorrichtung 22 mit Spiralbohrer 24 aus ihrer Arbeitsstellung herausgeschwenkt und die den Schrauber 25 aufnehmende Aufnahmevorrichtung 23, also der Universalhalter 23, in ihre Arbeitsstellung hineingedreht. Die mit dem Spannfutter 22 verbundene Spindel ist dann von der Antriebswelle 17 abgekoppelt, und die mit dem Universalhalter 23 verbundene Spindel ist auf die Antriebswelle 17 aufgekoppelt. Zum Schrauben kann mittels eines Drehmomenteinstellers 29 ein Anzugsdrehmoment vorgewählt werden, mit dem eine mit dem Schrauber 25 eingetriebene Schraube festgezogen werden soll. Der im Gehäuse 11 angeordnete Drehmomenteinsteller 29 weist ein Potentiometer 28, das im Stromkreis des Elektromotors 15 angeordnet ist (Fig. 2), und einen auf das Potentiometer 28 wirkenden Drehmoment-Vorwahlknopf 27 auf, der am Gehäuse 11 zur manuellen Betätigung zugänglich angeordnet ist. Durch Drehen des Drehmoment-Vorwahlknopfes 27 wird der Widerstandswert des Potentiometers 28 verändert und damit die Größe des vom Elektromotor 15 erzeugten Drehmoments variiert.

Beim Bohrvorgang mit dem Spiralbohrer 24 wird vom Elektromotor 15 ein maximales Drehmoment gefordert, während beim Eindrehvorgang einer Schraube mit dem Schrauber 25 ein demgegenüber reduziertes Drehmoment gewünscht wird, das nach individuellen Wünschen bemessen werden soll. Um beim Arbeitswechseln mit den Drehwerkzeugen 24, 25 ein automatisches Anpassen der von den Drehwerkzeugen geforderten Drehmomente zu erreichen, sind am Gehäuse 11 und am Revolverkopf 20 miteinander korrespondierende Schaltmittel vorgesehen, die beim Überführen der Aufnahmevorrichtungen 22, 23 für die Drehwerkzeuge 24, 25 in ihre jeweilige Arbeitsstellung automatisch eine Drehmoment-Einstellung vornehmen, und zwar in der Weise, dass nach Überführen des Spiralbohrers 24 in seine Arbeitsstellung maximales Drehmoment und nach Überführen des Schraubers 25 in seine Arbeitsstellung das am

Drehmoment-Vorwahlknopf 27 vorgewählte Drehmoment verfügbar ist. Hierzu weisen die Schaltmittel - wie dies in Fig. 2 und 3 dargestellt ist - eine am Revolverkopf 20 angeordnete Kontaktbrücke 30 und drei in der schrägen Fläche 19 des Gehäuses 11 angeordnete Kontakte 31, 32, 33 auf. Der Kontakt 31 ist über den Elektromotor 15 mit dem einen Pol oder Potential des Akkus 14 verbunden, während mit dem anderen Pol oder Potential des Akkus 14 einerseits der Kontakt 32 unmittelbar und andererseits der Kontakt 33 über das Potentiometer 28 verbunden ist. Die Kontakte 31 und 32 einerseits und die Kontakte 31 und 33 andererseits bilden zwei Kontaktpaare, deren Kontakte 31, 32 bzw. 31, 33 je nach Drehstellung des Revolverkopfs 20 miteinander verbunden werden.

Befindet sich der Revolverkopf 20 in einer solchen Drehstellung, dass der Spiralbohrer 24 seine Arbeitsstellung einnimmt (Fig. 1), so nimmt die Kontaktbrücke 30 eine Drehstellung ein, wie sie in Fig. 2 dargestellt ist. In dieser Drehstellung verbindet die Kontaktbrücke 30 die Kontakte 31 und 32, so dass der Elektromotor 15 mit dem Akku 14 in Reihe geschaltet ist und sein maximales Drehmoment an die Antriebswelle 17 abgibt, die wiederum mit der Spindel des Spannfutters 22 gekoppelt ist, so dass das maximale Antriebsmoment des Elektromotors 15 auf den Spiralbohrer 24 übertragen wird. Wird der Revolverkopf 20 in Richtung Pfeil 26 in Fig. 1 um 180° um die Hochachse 21 gedreht, so wird der Schrauber 25 in seine Arbeitsstellung gedreht und die Spindel des Universalhalters 23 mit der Antriebswelle 17 gekoppelt. Zugleich wird die Kontaktbrücke 30 um 180° geschwenkt und nimmt ihre in Fig. 3 dargestellte Stellung ein, in welcher sie die Kontakte 31 und 33 miteinander verbindet. Der Elektromotor 15 liegt nunmehr in Reihe mit dem Akku 14 und dem Potentiometer 28, dessen Widerstandswert durch die Drehstellung des Drehmoment-Vorwahlknopfes 27 bestimmt ist. Der Elektromotor 15 erzeugt ein durch den Widerstandswert des Potentiometers 28 bestimmtes, reduziertes Drehmoment, das über Getriebe 16, Antriebswelle 17, Spindel und Universalhalter 23 auf den Schrauber 25 übertragen wird.

Der Revolverkopf 20 kann auch so ausgebildet sein, dass das Überführen der beiden in den Aufnahmevorrichtungen 22, 23 aufgenommenen Drehwerkzeuge 24, 25 in ihre Arbeitsstellung und das damit verbundene Ankoppeln der Aufnahmevorrichtungen 22, 23 an den Drehantrieb 10, genauer gesagt an die Antriebswelle 17 des Drehantriebs 10, nicht durch Schwenken, sondern durch Umstecken des Revolverkopfs 20 herbeigeführt wird.

Hierzu ist die Verbindung von Revolverkopf 20 und Gehäuse 11 so ausgeführt, dass der Revolverkopf 20 vom Gehäuse 11 abziehbar und in einer um 180° gedrehten Stellung wieder auf das Gehäuse 11 aufsteckbar ist. Entsprechend ist die Kontaktbrücke 30 am Revolverkopf 20 so ausgeführt, dass sie in der einen Steckstellung das Kontaktpaar 31, 32 und in der um 180° gedrehten Steckstellung das Kontaktpaar 31, 33 kontaktiert.

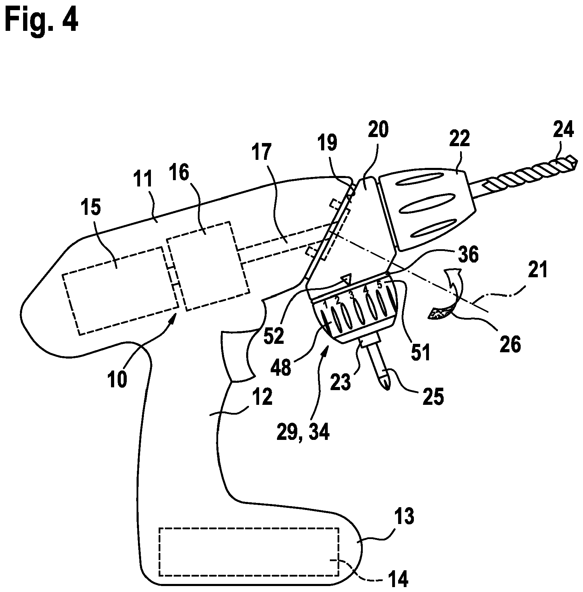

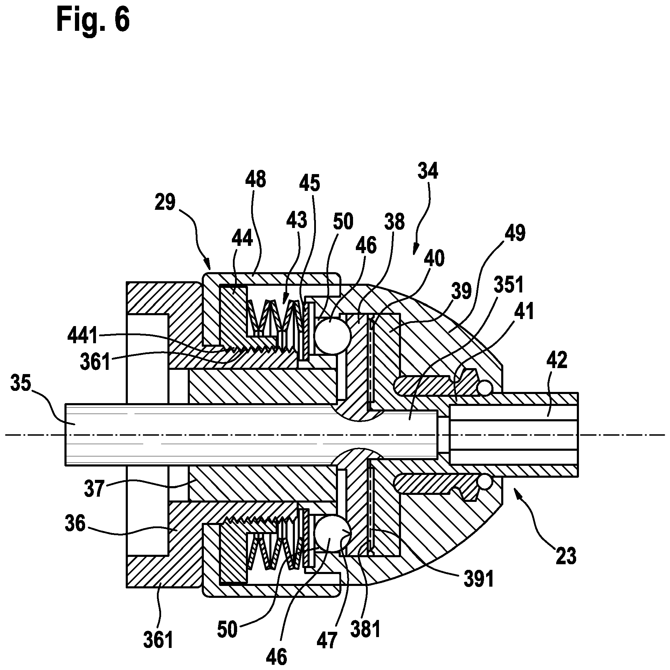

Der in Fig. 4 als weiteres Ausführungsbeispiel dargestellte Akku-Bohrschrauber unterscheidet sich von dem vorstehend beschriebenen und in Fig. 1 skizzierten Akku-Bohrschrauber dadurch, dass der Drehmomenteinsteller 29 zum Einstellen des am Universalhalter 23 für den Schrauber 25 wirksamen Drehmoments nicht im Gehäuse 11, sondern im Revolverkopf 20 angeordnet ist. Ansonsten sind übereinstimmende Bauteile in beiden Figuren mit gleichen Bezugszeichen gekennzeichnet. Der Drehmomenteinsteller 29 ist dabei mit dem Universalhalter 23 zu einer Baueinheit 34 mit einer Antriebsspindel 35 (Fig. 6) zusammengefasst, die nach Schwenken des Revolverkopfes 20 in die Arbeitsstellung des Universalhalters 23 automatisch an die Antriebswelle 17 angekoppelt ist.

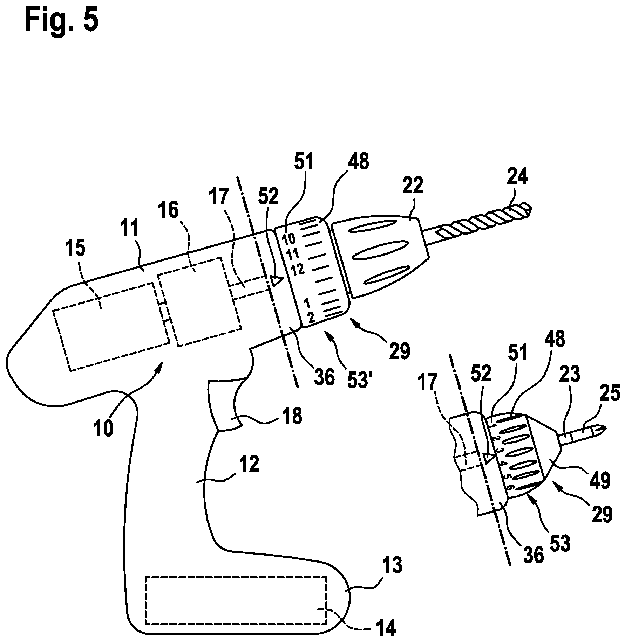

Eine beispielhafte Ausführung der Baueinheit 34 ist in Fig. 6 im Schnitt dargestellt. Die Baueinheit 34 weist einen Tragstutzen 36 auf, der vorzugsweise einstückiger Bestandteil des Revolverkopfes 20 ist, aber auch ein separates Bauteil sein kann, das mit dem Revolverkopf 20 fest verbunden wird. Der in Fig. 6 am Tragstutzen 36 angeformte Flansch 361 mit koaxialer Ausnehmung, der in Verbindung mit Fig. 5 noch angesprochen wird, kann entfallen. In den Tragstutzen 36 ist ein Außengewinde 361 eingearbeitet und eine Lagerbuchse 37 für die Antriebsspindel 35 eingesetzt. Die Antriebsspindel 35 ragt mit einem von der Abtriebswelle 17 abgekehrten Wellenabschnitt 351 aus der Lagerbuchse 37 heraus und trägt hier einen Radialflansch 38, der das eine Kupplungsglied einer Überrastkupplung 40 bildet. Auf das freie Ende eines über den Radialflansch 38 vorstehenden Wellenabschnitts 351 ist der Universalhalter 23 aufgesteckt. Er besteht aus einem im Längsschnitt T-förmigen Rotationskörper 41, der in seiner freien Stirnseite eine Einstecköffnung 42 für den Schrauber 25 aufweist und an seinem davon abgekehrten Ende einen das zweite Kupplungsglied der Überrastkupplung 40 bildenden Radialflansch 39 trägt. Der Radialflansch 39 ist gleich groß mit dem Radialflansch 38 ausgebildet und liegt auf diesem axial auf. In jedem Auflagebereich der beiden Radialflansche 38, 39 ist jeweils ein Zahnkranz aus Rastzähnen 381 bzw. 391 ausgebildet. Die Rastzähne 381, 391 werden durch eine Axialkraft miteinander in Eingriff gehalten, die durch eine Kupplungsfeder 43 der Überrastkupplung 40 aufgebracht wird. Die Kupplungsfeder 43 ist konzentrisch zum Tragstutzen 36 angeordnet und stützt sich einerseits an einem axial verschieblichen Spannglied 44 und andererseits an einer Andruckplatte 45 ab. Die Andruckplatte 45 liegt auf Kugeln 46 auf, die in kugelschalenartigen Einwölbungen 47 auf der von den Rastzähne 381 abgekehrten Rückseite des Radialflansches 38 einliegen. Die durch Axialverschiebung des Spannglieds 44 eingestellte Vorspannung der Kupplungsfeder 43 bestimmt das Überrastmoment an der Überrastkupplung 40 und damit das von der Antriebsspindel 35 auf den Universalhalter 23 übertragbare maximale Drehmoment.

Die Axialverschiebung des Spannglieds 44 wird dadurch erreicht, dass an dem konzentrisch zum Tragstutzen 36 angeordneten Spannglied 44 ein Innengewinde 441 vorgesehen ist, das mit dem Außengewinde 361 des Tragstutzens 36 in Eingriff steht. Das Spannglied 44 ist mit einem Drehmoment-Vorwahlring 48 fest verbunden, so dass beim Drehen des Drehmoment-Vorwahlrings 48 sich das Spannglied 44 auf dem Tragstutzen 36 verschraubt und damit je nach Drehrichtung des Drehmoment-Vorwahlrings 48 sich axial in die eine oder andere Richtung verschiebt und dadurch die Vorspannung der Kupplungsfeder 43 erhöht bzw. reduziert. Überrastkupplung 40 und Universalhalter 23 werden von einer Gehäusekappe 49 abgedeckt, die an dem Universalhalter 23 festgelegt ist. Die Gehäusekappe 49 erstreckt sich dabei mit einem Abschnitt unterhalb des Drehmoment-Vorwahlrings 48 und weist hier Führungen 50 auf, in welchen die Kugeln 46 der Überrastkupplung 48 aufgenommen sind. Die Größe des mit dem Drehmoment-Vorwahlring 48 einstellbaren Drehmoments ist durch eine Zifferskala 51 auf dem Drehmoment-Vorwahlring 48 angezeigt, deren Skalierung auf eine außen am Tragstutzen 36 angebrachten Markierung 52 einstellbar ist (Fig. 5).

Bei dem in Fig. 5 in Seitenansicht schematisiert dargestellten Akku-Bohrschraubers ist jeder Aufnahmevorrichtung 22, 23 für ein Drehwerkzeug 24, 25, also dem Spannfutter 22 zur Aufnahme des Spiralbohrers 24 und dem Universalhalter 23 zur Aufnahme des Schraubers 25, ein Drehmomenteinsteller 29 zugeordnet. Die Aufnahmevorrichtung 22 bzw. 23 und der Drehmomenteinsteller 29 sind zu einem an das Gehäuse 11 des Akku-Bohrschraubers ansetzbaren und vom Gehäuse 11 wieder abnehmbaren Wechselmodul 53' bzw. 53 zusammengefasst. Das Wechselmodul 53 ist beispielhaft wie in Fig. 6 ausgebildet. Im Unterschied zu der vorstehend in Verbindung mit Fig. 6 beschriebenen Baueinheit 34 ist jetzt der Tragstutzen 36 mit einem Aufsetzflansch 362 versehen. Mittels des Aufsetzflansches 362 kann das Wechselmodul 53 an das Gehäuse 11 angesetzt und dort befestigt werden. Die Antriebsspindel 35 wird beim Ansetzen des Wechselmoduls 53 automatisch mit der Antriebswelle 17 drehfest verbunden, z.B. durch formschlüssiges Ein- oder Aufstecken in bzw. auf das frei Ende der Antriebswelle 17.

Das Wechselmodul 53' kann ebenfalls wie das Wechselmodul 53 in Fig. 6 ausgeführt werden mit dem Unterschied, dass der Radialflansch 39 der Überrastkupplung 40 dann fest mit dem Spannfutter 22 verbunden ist.

Je nach vorzunehmendem Arbeitsvorgang wird das Wechselmodul 53 oder das Wechselmodul 53' an das Gehäuse 11 angesetzt, wobei das am Universalhalter 23 bzw. am Spannfutter 22 abnehmbare maximale Drehmoment solange beibehalten wird, bis der Drehmoment-Vorwahlring 48 gegenüber der am Tragstutzen 36 angebrachten Markierung 52 verdreht und damit ein neues Solldrehmoment vorgegeben wird.

## Patentansprüche

1. Elektrohandwerkzeugmaschine für Drehwerkzeuge, mit einem Gehäuse (11), mit einem im Gehäuse (11) aufgenommenen Drehantrieb (10) und mit mindestens zwei Aufnahmevorrichtungen (22, 23) für jeweils ein Drehwerkzeug (24, 25), die wechselweise mit dem Drehantrieb (10) koppelbar sind, wobei die mindestens zwei Aufnahmevorrichtungen (22, 23) an einem Revolverkopf (20) angeordnet sind und die wechselweise Kopplung der Aufnahmevorrichtungen (22, 23) mit dem Drehantrieb (10) durch Schwenken oder Umstecken des Revolverkopfs (20) in eine von zwei am Gehäuse (11) vorgebbaren Arbeitsstellungen erfolgt, **dadurch gekennzeichnet, dass** mindestens einer Aufnahmevorrichtung (23) ein Drehmomenteinsteller (29) zugeordnet ist, der dazu vorgesehen ist, zum Schrauben ein Anzugsdrehmoment vorzuwählen, mit dem eine mit einem Schrauber eingetriebene Schraube festgezogen werden soll, und der mit Koppeln von Aufnahmevorrichtung (23) und Drehantrieb (10) aktivierbar ist, wobei der Drehmomenteinsteller (29) im Gehäuse (11) angeordnet ist und am Gehäuse (11) und am Revolverkopf (20) miteinander korrespondierende Schaltmittel vorgesehen sind, die mit Überführen der den Drehmomenteinsteller (29) zugeordneten Aufnahmevorrichtung (23) in ihre Arbeitsstellung das am Drehmomenteinsteller (29) vorgewählte Drehmoment auf den Drehantrieb (10) aufschalten oder der Drehmomenteinsteller (29) im Revolverkopf (20) angeordnet ist.

2. Elektrohandwerkzeugmaschine nach Anspruch 1, **dadurch gekennzeichnet, dass** die Aufnahmevorrichtung (22 bzw. 23) und Drehmomenteinsteller (29) in einem an das Gehäuse (11) ansetzbaren und vom Gehäuse (11) abnehmbaren Wechselmodul (53' bzw. 53) angeordnet sind, das so ausgebildet ist, dass mit Ansetzen an das Gehäuse (11) die Kopplung mit dem Drehantrieb (10) vollzogen ist.

3. Elektrohandwerkzeugmaschine nach Anspruch 1 oder 2, **dadurch gekennzeichnet, dass** der Drehmomenteinsteller (29) einen im Stromkreis des Drehantriebs (10) einschaltbaren Widerstand, vorzugsweise ein mechanisches oder elektronisches Potentiometer (28), und einen dessen Widerstandswert verändernden Drehmoment-Vorwahlknopf (27) aufweist, der am Gehäuse (11) manuell zugänglich angeordnet ist, und dass die Schaltmittel am Gehäuse (11) angeordnete elektrische Kontakte (31, 32, 33) und mindestens eine am Revolverkopf (20) angeordnete, elektrische Kontaktbrücke (30) aufweisen, die durch Schwenken oder Umstecken des Revolverkopfs (20) ausgewählte Kontakte (31, 32 bzw. 31, 33) kontaktiert.

4. Elektrohandwerkzeugmaschine nach Anspruch 3, **dadurch gekennzeichnet, dass** die Kontakte (31, 32, 33) in den Stromkreis des Drehantriebs (10) so eingebunden sind, dass der Widerstand bei Verbindung des einen Kontaktpaars (31, 33) durch die Kontaktbrücke (30) in den Stromkreis des Drehantriebs (10) eingeschaltet und bei Verbindung des anderen Kontaktpaars (31, 32) durch die Kontaktbrücke (30) kurzgeschlossen ist.

5. Elektrohandwerkzeugmaschine nach Anspruch 4, **dadurch gekennzeichnet, dass** einer der Kontakte (31) jedem der beiden Kontaktpaare (31, 32 bzw. 31, 33) zugehörig ist.

6. Elektrohandwerkzeugmaschine nach einem der Ansprüche 1 bis 5, **dadurch gekennzeichnet, dass** der Drehmomenteinsteller (29) eine zwischen Drehantrieb (10) und Aufnahmevorrichtung (22, 23) angeordnete Überrastkupplung (40) mit Kupplungsgliedern (38, 39) und Kupplungsfeder (43) und einen Drehmoment-Vorwahlring (38) aufweist, mit dem die Vorspannung der Kupplungsfeder (43) einstellbar ist.

7. Elektrohandwerkzeugmaschine nach Anspruch 6, **dadurch gekennzeichnet, dass** Drehmomenteinsteller (29) mit Überrastkupplung (40) und Aufnahmevorrichtung (22) zu einer Baueinheit (34) zusammengefasst sind.

8. Elektrohandwerkzeugmaschine nach einem der Ansprüche 1 bis 7, **dadurch gekennzeichnet, dass** die eine Aufnahmevorrichtung (22) zum Einspannen eines Bohrers (24) und die andere Aufnahmevorrichtung (23) zum Einstecken eines Schraubers (25) ausgebildet ist, und dass der Drehmomenteinsteller (29) der den Schrauber (25) aufnehmenden Aufnahmevorrichtung (23) zugeordnet ist.

## Claims

1. Handheld electric machine tool for turning tools, comprising a housing (11), comprising a rotary drive (10) which is accommodated in the housing (11) and comprising at least two receiving devices (22, 23) for in each case one turning tool (24, 25), which receiving devices can be alternately coupled to the rotary drive (10), wherein the at least two receiving devices (22, 23) are arranged on a turret head (20) and the alternate coupling of the receiving devices (22, 23) to the rotary drive (10) is performed by pivoting or repositioning the turret head. (20) to one of two working positions which can be prespecified on the housing (11), **characterized in that** at least one receiving device (23) has an associated torque adjuster (29) which is provided to preselect a tightening torque for screwing purposes, with which tightening torque a screw which is driven in by a screwdriver is intended to be tightened, and which can be activated by coupling of the receiving device (23) and the rotary drive (10), wherein the torque adjuster (29) is arranged in the housing (11) and switching means which correspond to one another are provided on the housing (11) and on the turret head (20) and, when the receiving device (23) which is associated with the torque adjuster (29) moves to its working position, apply the torque which is preselected on the torque adjuster (29) to the rotary drive (10), or the torque adjuster (29) is arranged in the turret head (20).

2. Handheld electric machine tool according to Claim 1, **characterized in that** the receiving device (22 or 23) and the torque adjuster (29) are arranged in an interchangeable module (53' or 53) which can be mounted onto the housing (11) and can be removed from the housing (11) and is designed such that coupling to the rotary drive (10) is completed when it is mounted onto the housing (11).

3. Handheld electric machine tool according to Claim 1 or 2, **characterized in that** the torque adjuster (29) has a resistor which can be connected into the electrical circuit of the rotary drive (10), preferably a mechanical or electronic potentiometer (28), and a torque preselector knob (27) which changes the resistance value of the said resistor and is arranged in a manually accessible manner on the housing (11), and **in that** the switching means has electrical contacts (31, 32, 33), which are arranged on the housing (11), and at least one electrical contact bridge (30) which is arranged on the turret head (20) and makes contact with selected contacts (31, 32 or 31, 33) by pivoting or repositioning of the turret head (20).

4. Handheld electric machine tool according to Claim 3, **characterized in that** the contacts (31, 32, 33) are incorporated into the electrical circuit of the rotary drive (10) such that the resistor is connected into the electrical circuit of the rotary drive (10) when one contact pair (31, 33) is connected by the contact bridge (30) and is short-circuited when the other contact pair (31, 32) is connected by the contact bridge (30).

5. Handheld electric machine tool according to Claim 4, **characterized in that** one of the contacts (31) is associated with each of the two contact pairs (31, 32 and, respectively, 31, 33).

6. Handheld electric machine tool according to one of Claims 1 to 5, **characterized in that** the torque adjuster (29) has a safety clutch (40), which is arranged between the rotary drive (10) and the receiving device (22, 23) and has clutch elements (38, 39) and a clutch spring (43), and a torque preselector ring (38) with which the prestress of the clutch spring (43) can be adjusted.

7. Handheld electric machine tool according to Claim 6, **characterized in that** the torque adjuster (29) is combined with the safety clutch (40) and the receiving device (22) to form one physical unit (34).

8. Handheld electric machine tool according to one of Claims 1 to 7, **characterized in that** one receiving device (22) is designed for chucking a drill bit (24) and the other receiving device (23) is designed for inserting a screw bit (25), and **in that** the torque adjuster (29) is associated with the receiving device (23) which receives the screw bit (25).

## Revendications

1. Machine-outil manuelle électrique pour des outils rotatifs, comprenant un boîtier (11) avec un entraînement rotatif (10) reçu dans le boîtier (11) et au moins deux dispositifs de réception (22, 23) respectivement pour un outil rotatif (24, 25), lesquels peuvent être accouplés alternativement avec l'entraînement rotatif (10), dans laquelle les au moins deux dispositifs de réception (22, 23) sont disposés sur une tête de révolver (20) et l'accouplement alternatif des dispositifs de réception (22, 23) avec l'entraînement rotatif (10) est réalisé par pivotement ou permutation de la tête de révolver (20) dans l'une des deux positions de travail prédéfinissables sur le boîtier (11), **caractérisée en ce qu'**un dispositif de réglage de couple de rotation (29) est attribué à au moins un dispositif de réception (23), lequel est conçu pour présélectionner un couple de serrage pour le vissage, avec lequel une vis introduite à l'aide d'une visseuse est censée être serrée, et lequel peut être activé par l'accouplement du dispositif de réception (23) et de l'entraînement rotatif (10), dans laquelle le dispositif de réglage de couple de rotation (29) est disposé dans le boîtier (11) et des moyens de commutation correspondant les uns aux autres sont prévus sur le boîtier (11) et sur la tête de révolver (20), lesquels commutent le couple de rotation présélectionné sur le dispositif de réglage de couple de rotation (29) sur l'entraînement rotatif (10) en mettant le dispositif de réception (23) attribué au dispositif de réglage de couple de rotation (29) dans sa position de travail, ou le dispositif de réglage de couple de rotation (29) est disposé dans la tête de révolver (20).

2. Machine-outil manuelle électrique selon la revendication 1, **caractérisée en ce que** le dispositif de réception (22 ou 23) et le dispositif de réglage de couple de rotation (29) sont disposés dans un module interchangeable (53' ou 53) apte à être monté sur le boîtier (11) et démonté du boîtier (11), lequel est conçu de telle façon que lors du montage sur le boîtier (11), l'accouplement avec l'entraînement rotatif (10) est réalisé.

3. Machine-outil manuelle électrique selon la revendication 1 ou 2, **caractérisée en ce que** le dispositif de réglage de couple de rotation (29) comporte une résistance apte à être activée dans le circuit électrique de l'entraînement rotatif (10), de préférence un potentiomètre mécanique ou électronique (28), et un bouton de présélection de couple de rotation (27) modifiant la valeur de résistance de celle-ci, lequel est disposé sur le boîtier (11) de manière à être accessible manuellement, et **en ce que** les moyens de commutation comportent des contacts électriques (31, 32, 33) disposés sur le boîtier (11) et au moins un pont de contact électrique (30) disposé sur la tête de révolver (20), lequel est mis en contact avec des contacts sélectionnés (31, 32 ou 31, 33) par pivotement ou permutation de la tête de révolver (20).

4. Machine-outil manuelle électrique selon la revendication 3, **caractérisée en ce que** les contacts (31, 32, 33) sont intégrés de telle façon dans le circuit de l'entraînement rotatif (10), que la résistance est activée lors de la connexion de l'une des paires de contacts (31, 33) par le biais du pont de contact (30) dans le circuit électrique de l'entraînement rotatif (10), et court-circuitée lors de la connexion de l'autre paire de contacts (31, 32) par le biais du pont de contact (30).

5. Machine-outil manuelle électrique selon la revendication 4, **caractérisée en ce que** l'un des contacts (31) est associé à chacune des deux paires de contacts (31, 32 ou 31, 33).

6. Machine-outil manuelle électrique selon l'une des revendications 1 à 5, **caractérisée en ce que** le dispositif de réglage de couple de rotation (29) comporte un accouplement de surcharge (40) disposé entre l'entraînement rotatif (10) et le dispositif de réception (22, 23), avec des éléments d'accouplement (38, 39) et un ressort d'accouplement (43) et une bague de présélection de couple de rotation (38) permettant de régler la précontrainte du ressort d'accouplement (43).

7. Machine-outil manuelle électrique selon la revendication 6, **caractérisée en ce que** le dispositif de réglage de couple de rotation (29) est réuni en un seul bloc (34) avec l'accouplement de surcharge (40) et le dispositif de réception (22).

8. Machine-outil manuelle électrique selon l'une des revendications 1 à 7, **caractérisée en ce que** l'un des dispositifs de réception (22) est conçu pour le serrage d'une perceuse (24) et l'autre des dispositifs de réception (23) est conçu pour l'introduction d'une visseuse (25), et **en ce que** le dispositif de réglage de couple de rotation (29) est attribué au dispositif de réception (23) recevant la visseuse (25).
